# EUROPÄISCHE PATENTSCHRIFT

(11) **EP 2 092 583 B1**
(45) Veröffentlichungstag und Bekanntmachung des Hinweises auf die Patenterteilung: **09.06.2010**
(21) Anmeldenummer: 07846261.1
(22) Anmeldetag: 24.10.2007
(51) Int. Cl.: H01M 2/04, H01M 2/12, H01M 10/48

(54) **SÄUREZUSTANDSANZEIGER, BATTERIE, VERFAHREN ZUR HERSTELLUNG EINES SÄUREZUSTANDSANZEIGERS UND VERFAHREN ZUM HERSTELLEN EINER BATTERIE**
ACID STATUS INDICATOR, BATTERY, METHOD FOR THE PRODUCTION OF AN ACID STATUS INDICATOR, AND METHOD FOR THE PRODUCTION OF A BATTERY
INDICATEUR DE NIVEAU D'ACIDE, BATTERIE, PROCÉDÉ DE FABRICATION D'UN INDICATEUR DE NIVEAU D'ACIDE ET PROCÉDÉ DE FABRICATION D'UNE BATTERIE

(30) Priorität: 06.11.2006 DE 102006052524
(43) Veröffentlichungstag der Anmeldung: 26.08.2009
(73) Patentinhaber: VB Autobatterie GmbH & Co. KGaA, 30419 Hannover (DE)
(72) Erfinder: RICHTER, Gerolf, 31139 Hildesheim (DE); STREUER, Peter, 30559 Hannover (DE)
(74) Vertreter: Plöger, Jan Manfred
(86) Internationale Anmeldenummer: PCT/DE2007/001924
(87) Internationale Veröffentlichungsnummer: WO 2008/055470

(56) Entgegenhaltungen:
- EP-A- 1 633 008
- DE-U1- 20 218 730
- GB-A- 1 381 220
- US-A- 3 932 038
- US-A- 4 913 987

## Beschreibung

Die Erfindung betrifft einen Säurezustandsanzeiger für eine Batterie, insbesondere für einen Bleiakkumulator, mit einem Sichtstab und einer Halterung zum Halten des Sichtstabs und zum Befestigen des Säurezustandsanzeigers an einem Gehäuse der Batterie. Gemäß einem zweiten Aspekt betrifft die Erfindung eine Batterie. Gemäß einem dritten Aspekt betrifft die Erfindung ein Verfahren zum Herstellen eines Säurezustandsanzeigers und einer Batterie.

Säurezustandsanzeiger werden beispielsweise in Bleiakkumulatoren verwendet und dienen dort zur Anzeige des Ladungszustands. Derartige Ladungszustandsanzeiger beruhen auf dem Effekt, dass sich die Dichte eines in der Batterie vorhandenen Elektrolyten in Abhängigkeit von dem Ladezustand der Batterie ändert. Säurezustandsanzeiger umfassen dazu Auftriebskörper, deren Auftrieb von der Dichte des Elektrolyten abhängt. In dem Sichtstab ist eine Anzeigevorrichtung angeordnet, die den Auftrieb des Auftriebkörpers ermittelt und anhand dessen den Ladezustand der Batterie anzeigt. Um den Sichtstab mit einem Gehäuse zu verbinden, in dem die übrigen Komponenten der Batterie angeordnet sind, ist eine Halterung vorgesehen.

In der DE 298 21 994 U1 ist ein Säurezustandsanzeiger beschrieben, bei dem der Sichtstab und die Halterung ein integrales Bauteil bilden. Nachteilig hieran ist, dass ein für den Sichtstab besonders gut geeigneter Kunststoff in der Regel als Material für die Halterung wenig geeignet ist.

Bei dem aus der DE 298 08 883 U1 bekannten Säurezustandsanzeiger ist der Sichtstab mit der Halterung verschweißt. Nachteilig ist dabei, dass das Verschweißen einen zusätzlichen Arbeitsschritt bei der Herstellung bedeutet, der den Fertigungsaufwand erhöht.

Aus der EP 1 432 061 A1 ist ein Säurezustandsanzeiger bekannt, bei dem ein Sichtstab über eine Halterung an einem Gehäuse der Batterie befestigt ist. Um eine gute Dichtwirkung zwischen dem Sichtstab und der Halterung zu gewährleisten, sind zwischen Sichtstab und Halterung Weichkomponentendichtungen vorgesehen. In der EP 1 633 008 A1 ist eine Diagnosesonde für eine Starterbatterie beschrieben, bei der ein Sichtstab in einer Halterung angeordnet ist, an der eine Dichtung mit einer radial nach außen weisenden Dichtlippe angeordnet ist. Die Dichtungen unterliegen nachteiligerweise der Alterung. Zudem erhöht das Vorsehen einer Dichtung den Fertigungsaufwand.

Andere Säurezustandsanzeiger werden hergestellt, indem der Sichtstab unter Druck in die Halterung eingepresst wird, so dass zwischen beiden eine Press-passung entsteht. Anschließend werden im Rahmen der Fertigung der Batterie der Halter und der damit verbundene Sichtstab mit dem Gehäuse der Batterie fest verbunden. Als nachteilig an derartigen Säurezustandsanzeigern hat sich herausgestellt, dass selbst beim Vorsehen einer Presspassung nicht garantiert werden kann, dass die Verbindung zwischen dem Sichtstab und der Halterung säure- und gasdicht ist. Aus diesem Grund muss nach Fertigung der Batterie die Gas- und Säuredichtigkeit des Säurezustandsanzeigers überprüft werden, was aufwändig und teuer ist.

Ein weiterer Nachteil ist, dass auch eine zunächst dichte Verbindung zwischen dem Sichtstab und der Halterung unter ungünstigen Umständen undicht werden kann.

Aus der DE 40 07 905 A1 ist eine Anzeigevorrichtung für einen Batteriemessfühler bekannt, bei der eine Messfühlerplatte in einer Einsatzkappe gehaltert ist, wobei die Messfühlerplatte in der Einsatzkappe eine 90°-Biegung hat und in der Einsatzkappe umspritzt gehaltert ist.

Aus der DE 20 2005 019 009 U1 ist ein isolierter Batteriepol für eine Blei-Säure-Batterie bekannt, wobei der Batteriepol durch Umspritzen der Elektrode hergestellt ist.

Aus der DE 202 20 044 U1 eine Elektrolyt-Umwälzeinrichtung für einen Bleiakkumulator bekannt, die ein Luftleitrohr besitzt, dass von einer durch Umspritzung hergestellten elastischen Dichtungshülse umgeben ist. Mit Hilfe der Dichtungshülse kann das Luftleitrohr dichtend in einem nach innen stehenden Zylinderstück einer Aufnahmeöffnung angeordnet werden.

Aus der DE 78 22 820 U1 ist eine Poldurchführung für Akkumulatoren bekannt. Um eine Dichtigkeit gegenüber eindringendem Elektrolyten herzustellen, ist die den Zellenpol bildende Elektrode mit einem themoplastischen Kunststoffkörper umspritzt.

Der Erfindung liegt daher die Aufgabe zugrunde, einen Säurezustandsanzeiger anzugeben, der eine prozesssicher einstellbare gas- und säuredichte Verbindung zwischen dem Sichtstab und der Halterung besitzt.

Die Erfindung löst das Problem durch einen Säurezustandsanzeiger mit den Merkmalen von Anspruch 1. Gemäß einem zweiten Aspekt löst die Erfindung das Problem durch Verfahren zum Herstellen eines Säurezustandsanzeigers mit den Merkmalen von Anspruch 12.

Vorteilhaft an der Erfindung ist, dass durch die spezielle Art der Herstellung der Halterung prozesssicher eine gas- und säuredichte Verbindung zwischen dem Sichtstab und der Halterung erhalten wird. Hierdurch entfällt eine aufwändige Nachkontrolle. Es hat sich zudem herausgestellt, dass ein erfindungsgemäß hergestellter Säurezustandsanzeiger auch während der Benutzung seine Gas- und Säuredichtigkeit nicht verliert.

Vorteilhaft ist zudem die einfachere Fertigung, da ein Einschieben des Sichtstabs unter Druck in die Halterung vermieden wird. Bei der herkömmlichen Fertigung werden der Sichtstab und die Halterung im kalten Zustand miteinander verbunden. Dazu wird der Sichtstab unter Druck in die Halterung eingeschoben. Damit nach dem Einschieben eine Anpresskraft für die Presspassung zwischen beiden erhalten wird, müssen der Sichtstab beim Einschieben elastisch gestaucht und die Halterung gedehnt werden. Sowohl der Dehnung als auch der Stauchung sind aber durch die Festigkeit der verwendeten Kunststoffe Grenzen gesetzt. Daher kann der Sichtstab nur unter kleinem Druck eingeschoben werden, wodurch zwischen Sichtstab und Halterung nur eine relativ kleine Anpresskraft erhalten werden kann.

Wenn die Halterung erfindungsgemäß durch Umspritzen hergestellt wird, so legt sich der plastifizierte Kunststoff um den Sichtstab. Beim Erkalten schrumpft der Kunststoff und übt eine starke Anpresskraft auf den Sichtstab aus. Dadurch, dass die Halterung durch Umspritzen des Sichtstabs hergestellt ist, ergibt sich also eine auf den Sichtstab aufgeschrumpfte Halterung, die vollständig am Sichtstab anliegt. Die aufgeschrumpfte Halterung bildet mit dem Sichtstab eine besonders feste, gas- und säuredichte Presspassung, in der sich ein erfindungsgemäßer Säurezustandsanzeiger von Säurezustandsanzeigern nach dem Stand der Technik unterscheidet.

Es können daher sowohl für den Sichtstab als auch für die Halterung Kunststoffe verwendet werden, die aufgrund ihrer Sprödigkeit, das heißt aufgrund ihrer geringen Bruchdehnung ansonsten nicht verwendbar wären.

In der vorliegenden Beschreibung wird unter einem Sichtstab insbesondere ein Bauteil verstanden, das der Anzeige eines Säurezustands, insbesondere einer Säuredichte der Batterie dient. Der Sichtstab ist bevorzugt durchsichtig oder opak ausgebildet. Wenn der Sichtstab in die Säure eintaucht, so erscheint er an einem gehäuseseitigen Ende dunkel, ansonsten hell. Der Sichtstab erlaubt insbesondere einen Blick auf eine oder mehrere in einem Kugelkäfig angeordnete Kugeln zur Anzeige der Säuredichte.

Erfindungsgemäß sind der Sichtstab und die Halterung durch Zwei-Komponenten-Spritzguss hergestellt. Hierunter ist insbesondere zu verstehen, dass der Sichtstab und die Halterung in einem einzigen Zwei-Komponenten-Spritzguss-Verfahrensschritt und in einer einzigen Spritzgussmaschine hergestellt werden.

In einer bevorzugten Ausführungsform besteht der Sichtstab aus einem ersten Kunststoff und die Halterung besteht aus einem zweiten Kunststoff, wobei der erste Kunststoff beim Erkalten eine geringere Schrumpfung aufweist als der zweite Kunststoff. Hierdurch verspannen sich der Sichtstab und die Halterung beim Abkühlen der Kunststoffe gegeneinander, so dass vorteilhafterweise eine besonders gute Dichtwirkung zwischen dem Sichtstab und der Halterung erreicht wird. Bevorzugt ist dabei die Schrumpfung des zweiten Kunststoffs mindestens doppelt so groß wie die des ersten Kunststoffs. Unter der Schrumpfung wird insbesondere die relative Längenabnahme beim Abkühlen eines Kunststoffs von seiner Plastifizierungstemperatur auf Raumtemperatur verstanden.

In einer bevorzugten Ausführungsform umfasst der Sichtstab Styrol-Acrylnitril oder besteht aus Styrol-Acrylnitril.

In einer bevorzugten Ausführungsform umfasst die Halterung Polypropylen, insbesondere besteht die Halterung aus Polypropylen. Besonders günstig ist es, den Sichtstab aus Styrol-Acrylnitril und die Halterung aus Polypropylen in einem Zwei-Komponenten-Spritzguss-Verfahren herzustellen, da Polypropylen eine weitaus stärke Schrumpfung aufweist als Styrol-Acrylnitril, so dass sich aus den oben genannten Gründen prozesssicher ein gas- und säuredichter Säurezustandsanzeiger ergibt.

In einer bevorzugten Ausführungsform weist der Sichtstab eine Sicke auf, die von der Halterung formschlüssig umgeben ist. Es ist dabei günstig, wenn der Sichtstab abschnittsweise zylinderförmig ausgebildet ist und die Sicke vollständig um einen solchen zylinderförmigen Abschnitt herumläuft. Durch den Formschluss wird der Sichtstab besonders fest in der Halterung gehalten. Alternativ oder additiv weist der Sichtstab einen Vorsprung auf, der von der Halterung formschlüssig umgeben ist. Sowohl die Sicke als auch der Vorsprung können vollständig oder nur teilweise umlaufend ausgebildet sein.

Bevorzugt weist der Sichtstab zudem ein gestuftes Ende zur Anzeige unterschiedlicher Säurestände bzw. -niveaus auf.

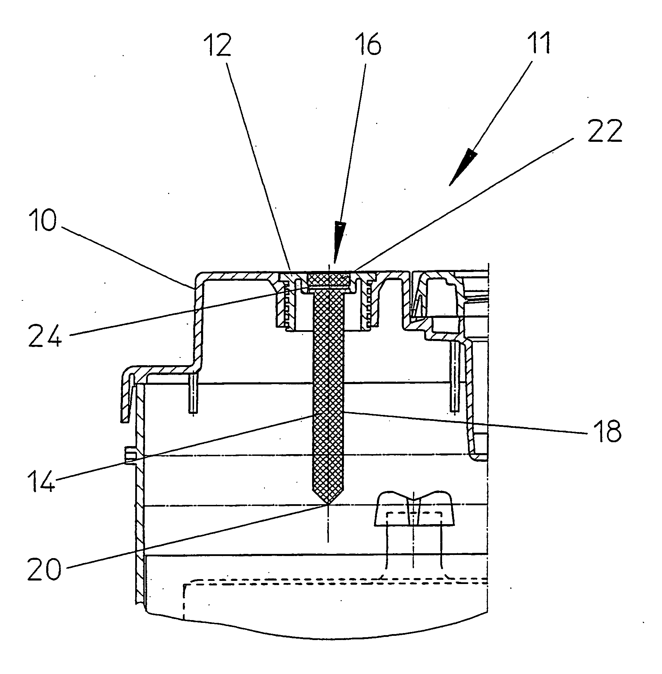

Im Folgenden wird die Erfindung anhand der Zeichnung näher erläutert, die einen Ausschnitt eines Gehäuses einer erfindungsgemäßen Batterie zeigt, das mit einem erfindungsgemäßen Säurezustandsanzeiger verbunden ist.

Die Figur zeigt einen Teil eines Gehäuses 10 einer Batterie 11 in Form eines Bleiakkumulators. Das Gehäuse 10 ist mit einer Halterung 12 verbunden, die einen Sichtstab 14 hält. Die Halterung 12 besteht aus Polypropylen und der Sichtstab 14 besteht aus Styrol-Acrylnitril. Die Halterung 12 und der Sichtstab 14 sind Bestandteile eines Säurezustandsanzeigers 16.

Der Sichtstab 14 besitzt einen zylinderförmigen Abschnitt 18, der an seinem einen, einem Inneren des Gehäuses 10 zugewandten Ende 20 in eine Spitze ausläuft. In alternativen Ausführungsformen läuft der zylinderförmige Abschnitt 18 in ein gerades Ende, in ein abgerundetes Ende oder in ein abgeschrägtes Ende aus.

An seinem dem Ende 20 abgewandten, dem Gehäuse 10 zugewandten Ende besitzt der Sichtstab 14 einen Kopf 22, der bündig mit der Halterung 12 abschließt. Der Kopf 22 hat an seinem dem zylinderförmigen Abschnitt 18 zugewandten Ende eine umlaufende Sicke 24.

Die Halterung 12 umgibt den gesamten Kopf 22 des Sichtstabs 14 und greift mit einem eingreifenden Vorsprung in die Sicke 24 ein. Die Halterung 12 und der Sichtstab 14 bilden eine gas- und säuredichte Presspassung. Die Sicke 24 und der in die Sicke 24 eingreifende Vorsprung verhindern eine Bewegung in axialer Richtung des Sichtstabs 14 relativ zur Halterung 12 und verstärken die Dichtwirkung zwischen der Halterung 12 und dem Sichtstab 14.

In einer alternativen Ausführungsform hat der Kopf 22 hat an seinem dem zylinderförmigen Abschnitt 18 zugewandten Ende einen umlaufenden Vorsprung. In diesem Fall greift der Kopf 22 mit seinem Vorsprung in eine entsprechende Sicke in der Halterung ein, so dass die Dichtwirkung verstärkt wird.

Zum Herstellen des Säurezustandsanzeigers 16 wird dann, wenn der Sichtstab 14 einen Vorsprung aufweist, in einer nicht eingezeichneten Spritzgussmaschine zunächst mit einem ersten Kunststoff, nämlich Styrol-Acrylnitril, der Sichtstab 14 gespritzt bzw. spritzgegossen. Anschließend wird die Halterung 12 im Rahmen eines Zwei-Komponenten-Spritzguss-Verfahrensschritts aus Polypropylen an den Sichtstab 14 angespritzt.

Weist der Sichtstab eine Sicke 24 auf, so wird vorteilhafterweise zunächst die Halterung 12 gespritzt und anschließend der Sichtstab 14.

Dadurch, dass sie nacheinander gespritzt werden, erkalten die Halterung 12 und der Sichtstab 14 unterschiedlich schnell. Aufgrund dieser unterschiedlichen Erkaltungszustände und der unterschiedlichen chemischen Zusammensetzung von erstem und zweitem Kunststoff vermischen sich Styrol-Acrylnitril und Polypropylen nicht, sondern bilden stets zwei getrennte Phasen. Der Sichtstab 14 und die Halterung 12 werden so gespritzt, dass sich zwischen den beiden Phasen im Wesentlichen keine Einschüsse, beispielsweise aus Luft, bilden.

Anschließend wird der so entstandene, sich im Rohzustand befindende Säurezustandsanzeiger 16 entformt und kühlt sich an der Umgebungsluft ab. Obwohl sich Styrol-Acrylnitril und Polypropylen nicht vermischen, sondern stets zwei Phasen bilden, entsteht wegen des innigen Materialkontakts zwischen dem ersten Kunststoff und dem zweiten Kunststoff, und weil Polypropylen eine stärkere Schrumpfung aufweist als Styrol-Acrylnitril, zwischen dem Sichtstab 14 und der Halterung 12 eine gasdichte Presspassung.

In einem nachfolgenden Schritt wird die Halterung 12 in das Gehäuse 10 eingepresst und/oder durch Ultraschallschweißen, Reibschweißen, Laserschweißen und/oder Kleben mit dem Gehäuse 10 und den übrigen Komponenten der Batterie verbunden.

### Bezugszeichenliste

- 10: Gehäuse
- 11: Batterie
- 12: Halterung
- 14: Sichtstab
- 16: Säurezustandsanzeiger
- 18: zylinderförmiger Abschnitt
- 20: Ende
- 22: Kopf
- 24: Sicke

## Patentansprüche

1. Säurezustandsanzeiger für eine Batterie (11), insbesondere für einen Bleiakkumulator, mit:
(a) einem Sichtstab (14) und
(b) einer Halterung (12) zum Halten des Sichtstabs (14) und zum Befestigen des Säurezustandsanzeigers (16) an einem Gehäuse (10) der Batterie (11),
**dadurch gekennzeichnet, dass** der Sichtstab (14) und die Halterung (12) durch Zwei-Komponenten-Spritzguss hergestellt sind, wobei die Halterung (12) durch Umspritzen des Sichtstabs (14) hergestellt ist.

2. Säurezustandsanzeiger nach Anspruch 1, **dadurch gekennzeichnet, dass** der Sichtstab (14) aus einem ersten Kunststoff besteht und die Halterung (12) aus einem zweiten Kunststoff besteht,
wobei der erste Kunststoff beim Erkalten eine geringere Schrumpfung aufweist als der zweite Kunststoff.

3. Säurezustandsanzeiger nach einem der vorstehenden Ansprüche, **dadurch gekennzeichnet, dass** die Halterung (12) und der Sichtstab (14) über eine Presspassung miteinander verbunden sind.

4. Säurezustandsanzeiger nach Anspruch 3, **dadurch gekennzeichnet, dass** die Presspassung säuredicht und/oder gasdicht ist.

5. Säurezustandsanzeiger nach einem der vorstehenden Ansprüche, **dadurch gekennzeichnet, dass** der Sichtstab (14) eine Sicke (24) aufweist und die Halterung (12) die Sicke (24) formschlüssig umgibt.

6. Säurezustandsanzeiger nach einem der vorstehenden Ansprüche, **dadurch gekennzeichnet, dass** der Sichtstab (14) einen Vorsprung aufweist und die Halterung (12) den Vorsprung formschlüssig umgibt.

7. Säurezustandsanzeiger nach einem der vorstehenden Ansprüche, **dadurch gekennzeichnet, dass** der Sichtstab (14) ein gestuftes Ende zur Anzeige unterschiedlicher Säurestände aufweist.

8. Säurezustandsanzeiger nach einem der vorstehenden Ansprüche, **dadurch gekennzeichnet, dass** der Sichtstab (14) am unteren Ende einen Vorsprung aufweist, der zur Aufnahme von zusätzlichen Anzeigemitteln dient, beispielsweise eines Kugelkäfigs zur Anzeige der Säuredichte.

9. Batterie, insbesondere Bleiakkumulator, mit einem Säurezustandsanzeiger (16) nach einem der vorstehenden Ansprüche.

10. Verfahren zum Herstellen eines Säurezustandsanzeigers (16), insbesondere eines Bleiakkumulators, mit dem Schritt: Umspritzen eines Sichtstabs (14) mit einer Halterung (12) zum Halten des Sichtstabs (14) und zum Befestigen des Säurezustandsanzeigers (16) an einem Gehäuse (10) der Batterie (11), wobei das Spritzen des Sichtstabs (14) und dessen Umspritzen als Zwei-Komponenten-Spritzgussverfahren durchgeführt wird.

11. Verfahren nach Anspruch 10, **dadurch gekennzeichnet, dass** der Sichtstab (14) so mit der Halterung (12) umspritzt wird, dass eine Presspassung, insbesondere ein gas- und/oder säuredichte Presspassung, zwischen dem Sichtstab (14) und der Halterung (12) entsteht.

12. Verfahren nach einem der Ansprüche 10 oder 11, **dadurch gekennzeichnet, dass** der Sichtstab (14) aus einem ersten Kunststoff gespritzt wird und die Halterung (12) aus einem zweiten Kunststoff gespritzt wird, der eine höhere Schrumpfung aufweist als der erste Kunststoff, so dass zwischen dem Sichtstab (14) und der Halterung (12) eine Presspassung, insbesondere eine gas- und/oder säuredichte Presspassung, entsteht.

13. Verfahren nach einem der Ansprüche 10 bis 12, **dadurch gekennzeichnet, dass** eine um der Sichtstab (14) umlaufende Sicke (24) des Sichtstabs (14) umspritzt wird, so dass an der Halterung (12) ein in die Sicke (24) eingreifender Vorsprung entsteht.

14. Verfahren nach einem der Ansprüche 10 bis 15, **dadurch gekennzeichnet, dass** ein um den Sichtstab (14) umlaufender Vorsprung des Sichtstabs (14) umspritzt wird, so dass die Halterung (12) den Vorsprung formschlüssig umgibt.

15. Verfahren zum Herstellen einer Batterie (11), mit den Schritten Herstellen eines Säurezustandsanzeigers (16) nach einem der Ansprüche 12 bis 17 und anschließend Verbinden des Säurezustandsanzeigers (16) mit einem Gehäuse (10) und übrigen Komponenten, so dass eine Batterie (11) entsteht.

## Claims

1. An acid status indicator for a battery (11), particularly a lead accumulator, with:
(a) a level gauge (14) and
(b) a fixture (12) to hold the level gauge (14) and to attach the acid status indicator (16) to a casing (10) of the battery (11),
**characterised in that** the level gauge (14) and the fixture (12) are made by two-component injection moulding, the fixture (12) being made by over-moulding the level gauge (14).

2. The acid status indicator according to claim 1, **characterised in that** the level gauge (14) consists of a first plastic material and the fixture (12) consists of a second plastic material, the first plastic material showing less shrinking when cooling than the second plastic material.

3. The acid status indicator according to one of the preceding claims, **characterised in that** the fixture (12) and the level gauge (14) are connected with each other by interference fit.

4. The acid status indicator according to claim 3, **characterised in that** the interference fit is acid tight and/or gas tight.

5. The acid status indicator according to one of the preceding claims, **characterised in that** the level gauge (14) has a bead (24) and that the fixture (12) comprises the bead (24) positively.

6. The acid status indicator according to one of the preceding claims, **characterised in that** the level gauge (14) has a protrusion, and that the fixture (12) comprises the protrusion positively.

7. The acid status indicator according to one of the preceding claims, **characterised in that** the level gauge (14) has a tiered end to display different acid statuses.

8. The acid status indicator according to one of the preceding claims, **characterised in that** the level gauge (14) has a protrusion on the lower end that serves as a reception of additional display means, for example a ball cage to display the acid density.

9. A battery, particularly a lead accumulator, with an acid status indicator (16) according to one of the preceding claims.

10. A method to produce an acid status indicator (16), particularly a lead accumulator with the step: over-moulding of a level gauge (14) with a fixture (12) to hold the level gauge (14) and to attach the acid status indicator (16) to a casing (10) of the battery (11), the moulding of the level gauge (14) and the over-moulding of it being executed as two-component injection moulding procedure.

11. The method according to claim 10, **characterised in** the level gauge (14) being over-moulded with the fixture (12) in such a way that an interference fit, particularly a gas-and/or acid tight interference fit, develops between the level gauge (14) and the fixture (12).

12. The method according to one of the claims 10 or 11, **characterised in** the level gauge (14) being injection-moulded from a first plastic and the fixture (12) being injection-moulded from a second plastic that shows a higher shrinkage than the first plastic, so that an interference fit, particularly a gas- and/or acid tight interference fit, develops between the level gauge (14) and the fixture (12).

13. The method according to one of the claims 10 to 12, **characterised in that** a bead (24) of the level gauge (14) going around the level gauge (14) is over-moulded, so that a protrusion develops on the fixture (12) that encroaches in the bead (24).

14. The method according to one of the claims 10 to 15, **characterised in that** a protrusion of the level gauge (14), going around the level gauge (14) is over-moulded so that the fixture (12) positively comprises the protrusion.

15. A method to produce a battery (11) with the steps to produc an acid status indicator (16) according to one of the claims 12 to 17 and subsequently to connect the acid status indicator (16) to a casing (10) and remaining components so that a battery (11) is produced.

## Revendications

1. Indicateur d'état d'acide pour une batterie (11), en particulier pour un accumulateur au plomb, comprenant :
(a) un barreau d'observation (14) et
(b) une monture (12) pour tenir le barreau d'observation (14) et pour fixer l'indicateur de niveau d'acide (16) sur un boîtier (10) de la batterie (11),
**caractérisé en ce que** le barreau d'observation (14) et la monture (12) sont fabriqués par moulage-injection à deux composants, dans lequel la monture (12) est fabriquée par enrobage du barreau d'observation (14).

2. Indicateur d'état d'acide selon la revendication 1, dans lequel le barreau d'observation (14) est en une première matière plastique et la monture (12) est en une seconde matière plastique,
telles que la première matière plastique présente lors du refroidissement une rétraction plus faible que la seconde matière plastique.

3. Indicateur d'état d'acide selon l'une des revendications précédentes, **caractérisé en ce que** la monture (12) et le barreau d'observation (14) sont reliés l'un à l'autre par ajustement de pressage.

4. Indicateur d'état d'acide selon la revendication 3, **caractérisé en ce que** l'ajustement de pressage est étanche aux acides et/ou étanche aux gaz.

5. Indicateur d'état d'acide selon l'une des revendications précédentes, **caractérisé en ce que** le barreau d'observation (14) comporte une moulure (24) et la monture (12) entoure la moulure (24) avec coopération de formes.

6. Indicateur d'état d'acide selon l'une des revendications précédentes, **caractérisé en ce que** le barreau d'observation (14) comporte une saillie et la monture (12) entoure la saillie avec coopération de formes.

7. Indicateur d'état d'acide selon l'une des revendications précédentes, **caractérisé en ce que** le barreau d'observation (14) comporte une extrémité en gradins pour indiquer différents niveaux d'acide.

8. Indicateur d'état d'acide selon l'une des revendications précédentes, **caractérisé en ce que** le barreau d'observation (14) comporte à l'extrémité inférieure une saillie qui sert à recevoir des organes indicateurs additionnels, par exemple une cage à bille pour indiquer la concentration de l'acide.

9. Batterie, en particulier accumulateur au plomb, comprenant un indicateur d'état d'acide (16) selon l'une des revendications précédentes.

10. Procédé pour fabriquer un indicateur d'état d'acide (16), en particulier d'un accumulateur au plomb, comprenant l'étape consistant à enrober un barreau d'observation (14) avec une monture (12) pour tenir le barreau d'observation (14) et pour fixer l'indicateur de niveau d'acide (16) sur un boîtier (10) de la batterie (11), dans lequel l'injection du barreau d'observation (14) et son enrobage sont exécutés sous forme d'un procédé de moulage-injection à deux composants.

11. Procédé selon la revendication 10, **caractérisé en ce que** le barreau d'observation (14) est enrobé avec la monture (12) de telle façon qu'il en résulte un ajustement de pressage, en particulier un ajustement de pressage étanche aux gaz et/ou étanche aux acides entre le barreau d'observation (14) et la monture (12).

12. Procédé selon l'une des revendications 10 ou 11, **caractérisé en ce que** le barreau d'observation (14) est injecté en une première matière plastique et la monture est injectée en une seconde matière plastique qui présente une rétraction plus élevée que la première matière plastique, de sorte qu'il en résulte entre le barreau d'observation (14) et la monture (12) un ajustement de pressage, en particulier un ajustement de pressage étanche aux gaz et/ou aux acides.

13. Procédé selon l'une des revendications 10 à 12, **caractérisé en ce qu'**une moulure (24) du barreau d'observation (14), en périphérie du barreau d'observation (14), est enrobée de telle façon qu'il en résulte au niveau de la monture (12) une saillie qui s'engage dans la moulure (24).

14. Procédé selon l'une des revendications 10 à 13, **caractérisé en ce qu'**une saillie du barreau d'observation (14), en périphérie du barreau d'observation (14), est enrobée de telle façon que la monture (12) entoure la saillie avec coopération de formes.

15. Procédé pour fabriquer une batterie (11), avec les étapes consistant à fabriquer un indicateur d'état d'acide (16) selon l'une des revendications 1 à 8 et ensuite à relier l'indicateur d'état d'acide (16) à un boîtier (10) et à d'autres composantes, de sorte qu'il en résulte une batterie (11).
